# EUROPEAN PATENT APPLICATION

(11) **EP 4 644 163 A1**
(43) Date of publication of application: **05.11.2025**
(21) Application number: 24174075.2
(22) Date of filing: 03.05.2024
(51) Int. Cl.: B60L 15/20, F16D 48/06, F16H 61/688, B60K 6/448, F16H 61/06

(54) **CONTROL SYSTEM AND METHOD FOR AVOIDING TORQUE LOSS DURING CHANGING MOVING DIRECTION OF ELECTRICAL VEHICLE**

(71) Applicant: VOLVO TRUCK CORPORATION, 405 08 Göteborg (SE)
(72) Inventor: Winblad, Hanna, 416 70 Göteborg (SE); Jakobsson, Samuel, 418 73 Göteborg (SE)
(74) Representative: Valea AB

(57) **Abstract**

A control system (110) and method for controlling torque and gear shifting during changing moving direction of an electrical vehicle (100) are provided. The control system (110) determines that a change of direction is requested and gear shifting is needed when the vehicle (100) changes direction. The control system (110) sends a control signal to a motor controller (130) for decelerating the vehicle (100) and controlling a braking torque of each electric motor individually to a level such that a total braking torque is at a first predetermined level (Tt1). When the speed of the vehicle (100) has been reduced to a predetermined speed, the control system (110) sends control signals to the motor controller (130) for controlling one motor (121, 122) at a time to ramp down braking torque to shift gear, and the other electric motor ramp up braking torque such that the total braking torque is maintained constant during gear shifting.

## Description

### TECHNICAL FIELD

The disclosure relates generally to electrical vehicles. In particular aspects, the disclosure relates to a control system and method for avoiding torque loss during changing moving direction of an electrical vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Motor-driven vehicles, particularly electric vehicles (EVs), utilize electric motors as their primary propulsion system instead of traditional internal combustion engines (ICEs). When a vehicle needs to change moving direction, for example from forwards to backwards or from backwards to forwards, a sequence of actions is happening, e.g. braking the vehicle to stop, shifting gear, then accelerating the vehicle rewards or forwards. For shifting gear, approximately 1 second is taken for the vehicle to stand still. If no gear shift is needed and the transmission is allowing speed on the same gear forwards and rearwards, there is no need for a gear shift and the direction change can be done very smoothly without a period of stand still. However, if different gears are needed for moving forwards and rearwards, e.g. if direction change is done on a hill, the vehicle needs to be braked to stop leading to an unwanted stand still period and torque loss.

### SUMMARY

According to a first aspect of the disclosure, a method performed in a control system for controlling torque and gear shifting during changing moving direction of an electrical vehicle is provided. The electrical vehicle comprises a gearbox with a first and second electric motors for providing propulsion for the electrical vehicle and a motor controller for controlling operations of the first and second electric motors. The method comprises determining that a change to a second direction is requested while the vehicle is moving in a first direction; determining that a gear shifting is needed for the gearbox when the vehicle is changing from the first direction to the second direction; sending a first control signal to the motor controller for decelerating the vehicle by setting the first and second electric motors to regenerative braking mode, wherein a braking torque of each electric motor is controlled individually such that a total braking torque is at a first predetermined level; determining that the speed of the vehicle has been reduced to a predetermined speed; sending a second control signal to the motor controller for controlling the first electric motor to ramp down its braking torque to zero and shift gear for the first electric motor while controlling the second electric motor to ramp up its braking torque such that the total braking torque is maintained at the first predetermined level; sending a third control signal to the motor controller for controlling the second electric motor to ramp down its braking torque to zero and shift gear for the second electric motor while controlling the first electric motor to ramp up its braking torque such that the total braking torque is maintained at the first predetermined level; sending a fourth control signal to the motor controller for controlling the second electric motor to ramp up its braking torque such that the total braking torque is increased gradually to a second predetermined level; determining that the speed of the vehicle has been reduced to zero; and sending a fifth control signal to the motor controller for controlling both the first and second electric motors to generate torque for accelerating the vehicle moving in the second direction.

The first aspect of the disclosure may seek a method to avoid a stand still period for the vehicle and reduce torque loss during direction change and make the direction transition smoothly. By controlling the braking torques of the two motors individually during direction change, the total braking torque can be maintained constant which makes the sequence of braking, gear shifting and accelerating smoothly during direction change. By shifting gear for one motor at a time, at least one motor can always brake the vehicle and the need for mechanical brakes can be avoided which is desirable for recuperation of kinetic energy into batteries. A technical benefit may include avoiding the unwanted stand still period and torque loss. It enables the most sufficient or suitable gear to be used in each direction. Wearing mechanical brakes can also be avoided. It will give the driver a nice experience and improve the performance of the already existing feature for change of direction.

According to a second aspect of the disclosure, a control system for controlling torque and gear shifting during changing moving direction of an electrical vehicle is provided. The control system is configured to determine that a change to a second direction is requested while the vehicle is moving in a first direction; determine that a gear shifting is needed for the gearbox when the vehicle is changing from the first direction to the second direction; send a first control signal to the motor controller for decelerating the vehicle by setting the first and second electric motors to regenerative braking mode, wherein a braking torque of each electric motor is controlled individually to a level such that a total braking torque is at a first predetermined level; determine that a speed of the vehicle has been reduced to a predetermined speed; send a second control signal to the motor controller for controlling the first electric motor to ramp down its braking torque to zero, and shift gear for the first electric motor while controlling the second electric motor to ramp up its braking torque such that the total braking torque is maintained at the first predetermined level; send a third control signal to the motor controller for controlling the second electric motor to ramp down its braking torque to zero and shift gear for the second electric motor while controlling the first electric motor to ramp up its braking torque such that the total braking torque is maintained at the first predetermined level; send a fourth control signal to the motor controller for controlling the second electric motor to ramp up its braking torque such that the total braking torque is increased gradually to a second predetermined level; determine that the speed of the vehicle has been reduced to zero; and send a fifth control signal to the motor controller for controlling both the first and second electric motors to generate torque for accelerating the vehicle moving in the second direction.

The second aspect of the disclosure may seek to a control system to avoid a stand still period for the vehicle and reduce torque loss during direction change and make the direction transition smoothly. A technical benefit may include avoiding the unwanted stand still period, reducing torque loss, enabling the most sufficient or suitable gear to be used in each direction, avoiding wearing mechanical brakes, giving the driver a nice experience and improving the performance of the already existing feature for change of direction.

Optionally in some examples, including in at least one preferred example, the first predetermined level may be the maximum braking torque that can be delivered by one electric motor separately. The second predetermined level may be determined by a torque demand from a driver of the vehicle. The second predetermined level may be the maximum braking torque that can be delivered by the first and second electric motors together. A technical benefit may include using the braking torques of the two motors efficiently and braking the vehicle as quick as possible, or braking the vehicle as desired by the driver of the vehicle.

Optionally in some examples, including in at least one preferred example, the second electric motor may be controlled to ramp up its braking torque to its maximum braking torque when the first electric motor is ramping down its braking torque to zero for gear shifting. The first electric motor may be controlled to ramp up its braking torque to its maximum braking torque when the second electric motor is ramping down its braking torque to zero for gear shifting. A technical benefit may include using the braking torque of each motor efficiently and making the total braking torque constant during direction change.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is diagram showing a sequence of torque changes and gear shifting timings for two motors in a vehicle during changing of direction according to an example;
**FIG. 2** is a diagram showing a sequence of torque changes and gear shifting timings for two motors in a vehicle during changing of direction according to an example.
**FIG. 3** is an exemplary block diagram showing (a) a vehicle, (b) a driving system of the vehicle according to an example;
**FIG. 4** is a flow chart showing an exemplary method performed in a control system according to an example;
**FIG. 5** is an exemplary block diagram showing a control system according to an example; and
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

A quick change of moving direction is a crucial feature for vehicles, for example to avoid tough road conditions or when in an emergency situation. In ICE vehicles, the current solution is that a gear shift is proceeded when the vehicle is at stand still due to the fact that the transmission doesn't allow forward and rearward speed on the same gear since the engine has a fixed rotational direction. This leads to a stand still period of approximately 1 second is needed if the gearbox should be shifted. In electrical vehicles one way of making the change of direction smooth has been to use the same gear forwards and rearwards, as the transmission allows the same gear forwards and rearwards since electrical motors can be rotated in two rotational directions. However, even if the transmission allows the same gears in both directions, the direction change of a vehicle may be done with heavy load on a hill. In this case, the current forward gear and the suitable start gear rearwards are not aligning due to the torque required when driving in a positive inclination of the hill is much greater than in a negative inclination. This will lead to an unsuitable gear will be kept if the direction change is done on a hill and this means that a gear shift is needed. If different gears are needed for forwards and rearwards, the same strategy may be used as for ICE vehicles, i.e. shifting gear when the vehicle is braked to stop which leads to an unwanted stand still period and torque loss.

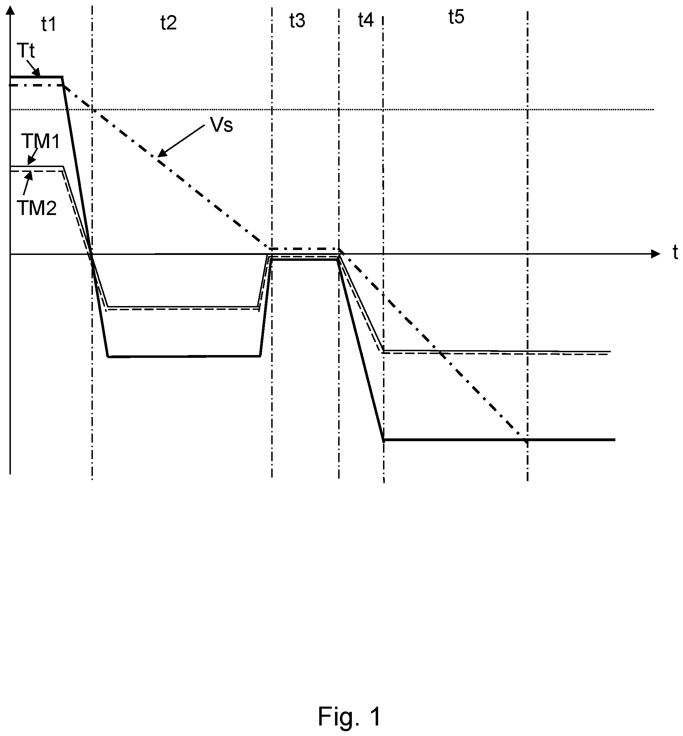

**Fig. 1** shows a sequence of torque changes and gear shifting timing for two motors during changing of direction when using the same strategy as for ICE vehicles, where the line indicated by **TM1** is the torque of the first motor over time, the line indicated by **TM2** is the torque of the second motor over time, the line indicated by **Tt** is the total torque over time, the line indicated by **Vs** is the speed of the vehicle over time. During a first time period t1, the vehicle is in normal driving, e.g. in forward direction, both motors generate positive torques and provide a total driving torque for the vehicle to move forwards. When a quick change of direction is requested, e.g. when the brake pedal is pressed, both motors are set to regenerative braking mode. The driving torques are ramped down for both motors and then the two motors start to generate negative torque, i.e., braking torque to brake the vehicle during a second time period t2 until the vehicle speed Vs reaches zero. When the vehicle is at stand still during a third time period t3, gear shifts are performed for both motors. After the gear shifts, during the fourth time period t4, torques are ramped up for both motors and the vehicle starts accelerating in the new direction. During a fifth time period t5, the vehicle is in normal driving in the new direction, in this case rearwards. As can be seen from the figure, an unwanted stand still period t3 is needed for shifting gear which leads to torque loss and unsmooth driving experience.

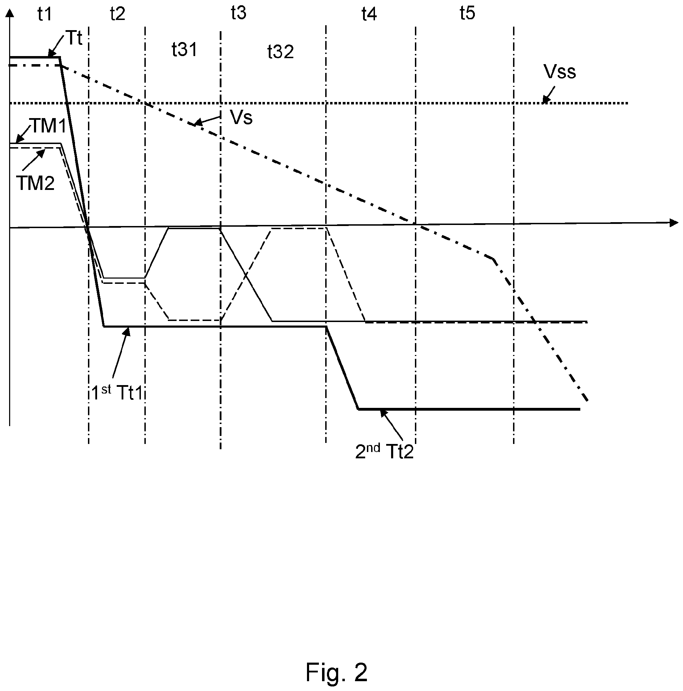

Powershift is a type of transmission system used in vehicles. It is when one part of a gearbox is shifted while the other part of the gearbox is still engaged and can give propulsion power. The disclosure provides a control system and method for controlling gear shifting and shift timing using the concept of powershift so that the gear shifting is smooth, and braking torque can be constantly provided over direction change. **Fig. 2** shows a sequence of torque changes and gear shifting timings for two motors during changing of direction with utilization of powershift, where the line indicated by **TM1** is the torque of the first motor over time, the line indicated by **TM2** is the torque of the second motor over time, the line indicated by **Tt** is the total torque over time, the line indicated by **Vs** is the speed of the vehicle over time, the line indicated by **Vss** is the suitable speed of the vehicle for gear shifting. During a first time period t1, the vehicle is in normal driving, e.g. in forward direction, both motors generate positive torques and provide a total driving torque Tt for the vehicle to move forwards. When a quick change of direction is requested, both motors are set to regenerative braking mode, the driving torques are ramped down for both motors and then both motors start to generate braking torque to brake the vehicle during a second time period t2 until the vehicle speed Vs reaches a suitable speed Vss for shift gear. The braking torque of each electric motor is controlled individually such that a total braking torque is at a first predetermined level Tt1. Then during a third time period t3, shift gear for one motor at a time, e.g. shift gear firstly for the first motor during time period t31 and then secondly for the second motor during time period t32. While the braking torque of one motor is ramped down to zero to shift gear, the braking torque of the other motor is ramped up to fill in with braking torque, i.e. the total braking torque is maintained constant, e.g. at the first predetermined level Tt1. For example, during time period t31, the braking torque of the first motor is ramped down to shift gear and the braking torque of the second motor is ramped up to fill in braking torque such that the total braking torque is maintained at the first predetermined level Tt1, and during time period t32, the braking torque of the second motor is ramped down to shift gear and the braking torque of the first motor is ramped up to fill in braking torque such that the total braking torque is maintained at the first predetermined level Tt1. That is during the time period when the gear shifts are performed for both motors, the total braking torque is maintained constant. During the fourth time period t4, the braking torque is ramped up for the second motor and the total braking torque is increased gradually to a second predetermined level Tt2, the vehicle is braked with both motors until its speed reaches zero. Then during a fifth time period t5, both motors can immediately be used to accelerate the vehicle in the new direction, in this case rearwards. As can be seen from the figure, there is no stand still period. This will make the direction transition as smooth as possible. The most sufficient or suitable gear can be used in each direction. At least one motor can always brake the vehicle and the need for mechanical brakes can be avoided, which is desirable for recuperation of kinetic energy into batteries to avoid torque loss and wear of the mechanical brakes. It will give the driver a nice experience and improve the performance of the already existing feature for change of direction.

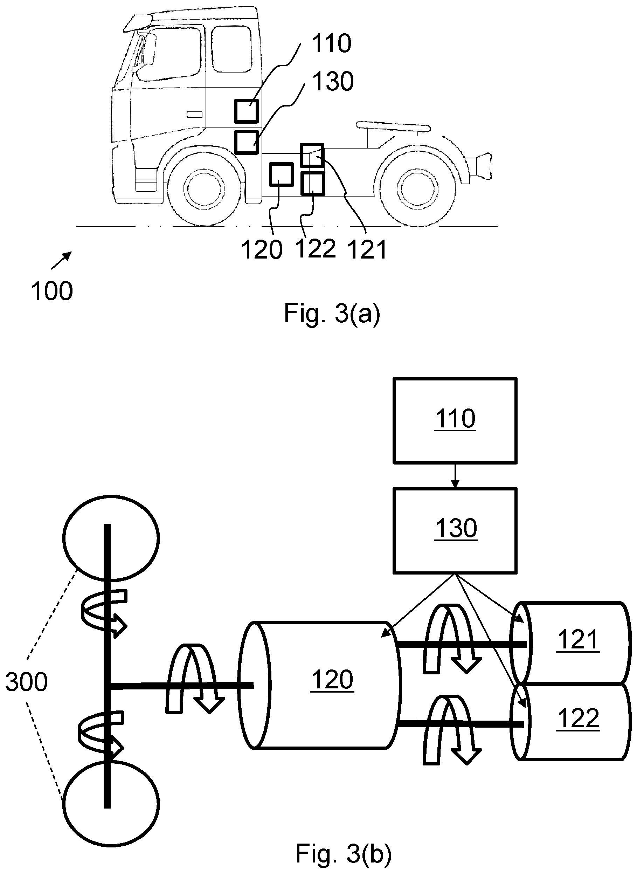

**Fig. 3 (a)** shows an example of an electric motor-driven vehicle **100** and **(b)** is a simplified block diagram showing a motor-driven system comprised in the vehicle 100. The electrical vehicle 100 comprises a control system **110** to optimize the performance, efficiency, and safety of the electric vehicle 100. The control system 110 may also be referred to as a computer system comprising a processing circuitry. The control system 110 may receive various information from internal and/or external system, e.g. data or inputs from sensors comprised in the vehicle 100, data or information from a central system e.g. a cloud server, a Telematics server or a local server, commands from driver etc., to generate appropriate control signals for controlling other internal and/or external systems or causing other internal and/or external systems to act.

The electric vehicle 100 comprises a gearbox **120** coupled to a first and second electric motors **121, 122** for providing propulsion for the electrical vehicle 100. The gearbox **120** is a part of a transmission system (not shown) in the vehicle 100 for connecting the electric motors to the wheels **300.** The transmission system may include components to facilitate regenerative braking, such as controllers and inverters that manage the flow of energy between the electric motors and battery. The electrical vehicle 100 further comprises a motor controller **130** for controlling operations of the first and second electric motors 121, 122, e.g. power control, traction control, stability control, and torque control etc. The motor controller 130 may continuously monitor and adjust the power delivery to each wheel 300, regulate the flow of electricity from the battery to the motors, adjust the motor's speed and torque according to control signals from the control system 110 generated based on factors such as vehicle operating conditions, road conditions, traction, and driver input etc.

According to an example, the method for controlling torque and gear shifting during changing moving direction of the vehicle 100 may be implemented in the control system 110. When the electrical vehicle 100 is in a normal driving, e.g. in forward direction, a quick change of direction is requested. The control system 110 sends control signals to brake the vehicle 100, and the total braking torque may be limited to e.g. what is the maximum for one motor to deliver. When a moderate speed of the vehicle is reached, e.g. about 5-10 km/h, shift gear for one motor at a time while the other motor is still giving braking power. As long as the braking torque delivered by one motor is enough to brake the vehicle 100, no mechanical brakes are needed and no stand still period is needed for shift gear procedure.

The gear shift timing may also be applied to a gear shift without the possibility of powershifts. For example, during a power cut off while the gear shift is carried out, mechanical brakes can take over and brake the vehicle. Since the gear that is suitable to accelerate in the new direction is already shifted to, no stand still period is needed, and the direction transition will be smooth.

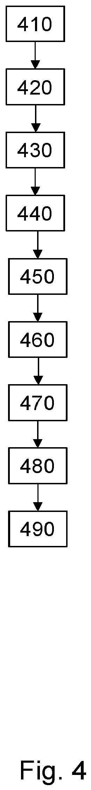

A method performed in a control system 110 for controlling torque and gear shifting during changing moving direction of an electrical vehicle 100 will be described with reference to **Fig. 4****.** The method comprises at least one of the following actions, which may be performed in any suitable order.

### Action 410

The control system 110 determines that a change to a second direction is requested while the vehicle 100 is moving in a first direction. For example, when the electrical vehicle 100 is in a normal driving, e.g. in forward direction, the driver may decide to change the direction to backward, then a signal is sent to the control system 110. The control system 110 receives the signal and determines that this signal is a change direction request.

### Action 420

The control system 110 determines that a gear shifting is needed for the gearbox 120 when the vehicle 100 is changing from the first direction to the second direction. For example, the vehicle 100 is moving downhill and needs to change to uphill, the gear for moving downhill is not suitable or insufficient for moving uphill, so the gear shifting is needed.

### Action 430

The control system 110 sends a first control signal to the motor controller 130 for decelerating the vehicle 100 by setting the first and second electric motors 121, 122 to regenerative braking mode. A braking torque of each electric motor is controlled individually such that a total braking torque is at a first predetermined level Tt1. For example, the first predetermined level Tt1 may be the maximum braking torque that can be delivered by one electric motor separately. Regenerative braking is a technique commonly used in electric vehicles and hybrid vehicles. It involves reversing the operation of the electric motor to act as a generator, converting the vehicle's kinetic energy back into electrical energy. As the vehicle 100 decelerates due to braking, its kinetic energy, which is the energy of motion, is converted into electrical energy by the electric motor acting as a generator. So, when the first and second electric motors 121, 122 are in regenerative braking mode, braking torque is generated that slows down the vehicle 100 while simultaneously charging the vehicle's battery.

### Action 440

The control system 110 determines that the speed of the vehicle 100 has been reduced to a predetermined speed Vss, e.g. a speed of about 5-10 km/h suitable to shift gear.

### Action 450

The control system 110 sends a second control signal to the motor controller 130 for controlling the first electric motor 121 to ramp down its braking torque to zero and shift gear for the first electric motor 121 while controlling the second electric motor 122 to ramp up its braking torque such that the total braking torque is maintained at the first predetermined level Tt1. The second electric motor 122 may be controlled to ramp up its braking torque to its maximum braking torque when the first electric motor (121) is ramping down its braking torque to zero for gear shifting.

Ramping down and up torque involves controlling the rate at which torque is decreased or increased over time. This can be achieved through various control techniques, particularly in systems utilizing electric motors. For example, to ramp down/up torque, the amount of electrical current supplied to the motor may be gradually reduced/increased. This can be accomplished by slowly decreasing/increasing the voltage applied to the motor or by adjusting the motor controller to reduce/increase the torque output gradually. Proportional-Integral-Derivative (PID) control algorithms or closed-loop control systems may be employed to regulate the motor's torque output during deceleration/ acceleration. By adjusting the parameters, such as proportional, integral, and derivative gains, or by continuously monitoring feedback signals such as motor speed or current, the rate of torque decrease/increase can be controlled.

### Action 460

The control system 110 sends a third control signal to the motor controller 130 for controlling the second electric motor 122 to ramp down its braking torque to zero and shift gear for the second electric motor 122 while controlling the first electric motor 121 to ramp up its braking torque such that the total braking torque is maintained at the first predetermined level Tt1. The first electric motor 121 may be controlled to ramp up its braking torque to its maximum braking torque when the second electric motor 122 is ramping down its braking torque to zero for gear shifting.

### Action 470

The control system 110 sends a fourth control signal to the motor controller 130 for controlling the second electric motor 122 to ramp up its braking torque such that the total braking torque is increased gradually to a second predetermined level Tt2. The second predetermined level Tt2 may be determined by a torque demand from a driver of the vehicle 100. The second predetermined level may also be the maximum braking torque that can be delivered by the first and second electric motors together. The vehicle 100 is braked with both motors until its speed reaches zero.

### Action 480

The control system 110 determines that the speed of the vehicle 100 has been reduced to zero.

### Action 490

The control system 110 sends a fifth control signal to the motor controller 130 for controlling both the first and second electric motors 121, 122 to generate driving torque for accelerating the vehicle to move in the second direction. As gear shifting has been completed for both motors, both motors can immediately be used to accelerate the vehicle 100 in the new direction, in this case rearwards. There is no stand still period and the direction transition is made as smooth as possible.

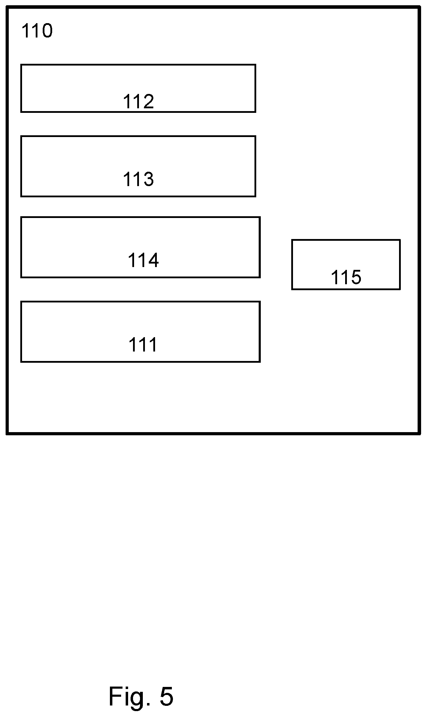

To perform the method for controlling torque and gear shifting during changing moving direction of an electrical vehicle 100, the control system 110 may comprise modules or units as shown in **Fig. 5****.** The control system 110 may comprise a **receiving module 111, a sending module 112, a determining module 113, a processing module 114** etc. The control system 110 may comprise other units or modules, e.g. **a memory 115.**

The control system 110 is configured to, by means of e.g. the determining module 113 being configured to, determine that a change to a second direction is requested while the vehicle 100 is moving in a first direction.

The control system 110 is configured to, by means of e.g. the determining module 113 being configured to, determine that a gear shifting is needed for the gearbox 120 when the vehicle 100 is changing from the first direction to the second direction.

The control system 110 is configured to, by means of e.g. the sending module 111 being configured to, send a first control signal to the motor controller 130 for decelerating the vehicle 100 by setting the first and second electric motors 121, 122 to regenerative braking mode. A braking torque of each electric motor is controlled individually to a level such that a total braking torque is at a first predetermined level Tt1.

The control system 110 is configured to, by means of e.g. the determining module 113 being configured to, determine that a speed of the vehicle 100 has been reduced to a predetermined speed Vss.

The control system 110 is configured to, by means of e.g. the sending module 111 being configured to, send a second control signal to the motor controller 130 for controlling the first electric motor 121 to ramp down its braking torque to zero and shift gear for the first electric motor 121 while controlling the second electric motor 122 to ramp up its braking torque such that the total braking torque is maintained at the first predetermined level Tt1.

The control system 110 is configured to, by means of e.g. the sending module 111 being configured to, send a third control signal to the motor controller 130 for controlling the second electric motor 122 to ramp down its braking torque to zero and shift gear for the second electric motor 122 while controlling the first electric motor 121 to ramp up its braking torque such that the total braking torque is maintained at the first predetermined level Tt1.

The control system 110 is configured to, by means of e.g. the sending module 111 being configured to, send a fourth control signal to the motor controller 130 for controlling the second electric motor 122 to ramp up its braking torque such that the total braking torque is increased gradually to a second predetermined level Tt2.

The control system 110 is configured to, by means of e.g. the determining module 113 being configured to, determine that the speed of the vehicle 100 has been reduced to zero.

The control system 110 is configured to, by means of e.g. the sending module 111 being configured to, send a fifth control signal to the motor controller 130 for controlling both the first and second electric motors 121, 122 to generate torque for accelerating the vehicle moving in the second direction.

The control system 110 and the method described above may be implemented in any vehicles as shown in Fig. 3. The vehicle 100 comprises the control system 110 described above. The control system 110 can be applied in any type of vehicles or machines having two motors such as wagons, motor vehicles, cars, trucks, buses etc.

To summarize, the method for controlling torque and gear shifting during changing moving direction of an electrical vehicle 100 enables the most sufficient or suitable gear to be used for the vehicle in each direction. During direction change, at least one motor can always brake the vehicle and the need for mechanical brakes can be avoided, which is desirable for recuperation of kinetic energy into batteries. Torque loss and wear of the mechanical brakes can be avoided. It will also give the driver a nice experience and improve the performance of the already existing feature for change of direction.

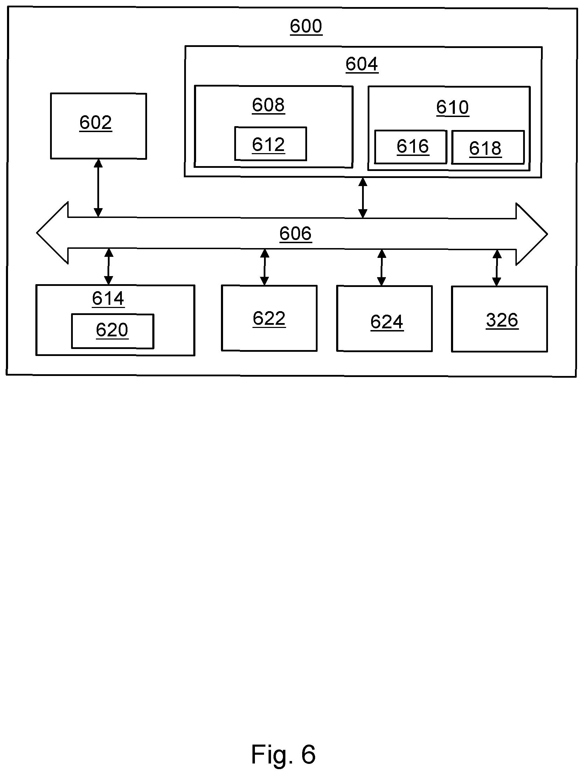

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610**, which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614**, which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Some examples are listed in the following:
**Example 1:** A method performed in a control system (110) for controlling torque and gear shifting during changing moving direction of an electrical vehicle (100), wherein the electrical vehicle (100) comprises a gearbox (120) with a first and second electric motors (121, 122) for providing propulsion for the electrical vehicle (100) and a motor controller (130) for controlling operations of the first and second electric motors (121, 122), the method comprising:
   determining (410) that a change to a second direction is requested while the vehicle (100) is moving in a first direction;
   determining (420) that a gear shifting is needed for the gearbox (120) when the vehicle (100) is changing from the first direction to the second direction;
   sending (430) a first control signal to the motor controller (130) for decelerating the vehicle (100) by setting the first and second electric motors (121, 122) to regenerative braking mode, wherein a braking torque of each electric motor is controlled individually such that a total braking torque is at a first predetermined level (Tt1);
   determining (440) that a speed of the vehicle (100) has been reduced to a predetermined speed (Vss);
   sending (450) a second control signal to the motor controller (130) for controlling the first electric motor (121) to ramp down its braking torque to zero and shift gear for the first electric motor (121) while controlling the second electric motor (122) to ramp up its braking torque such that the total braking torque is maintained at the first predetermined level (Tt1);
   sending (460) a third control signal to the motor controller (130) for controlling the second electric motor (122) to ramp down its braking torque to zero and shift gear for the second electric motor (122) while controlling the first electric motor (121) to ramp up its braking torque such that the total braking torque is maintained at the first predetermined level (Tt1);
   sending (470) a fourth control signal to the motor controller (130) for controlling the second electric motor (122) to ramp up its braking torque such that the total braking torque is increased gradually to a second predetermined level (Tt2);
   determining (480) that the speed of the vehicle (100) has been reduced to zero; and
   sending (490) a fifth control signal to the motor controller (130) for controlling both the first and second electric motors (121, 122) to generate torque for accelerating the vehicle (100) moving in the second direction.
**Example 2:** The method according to Example 1, wherein the first predetermined level (Tt1) is the maximum braking torque that can be delivered by one electric motor separately.
**Example 3:** The method according to any one of Examples 1-2, wherein the second predetermined level (Tt2) is determined by a torque demand from a driver of the vehicle (100).
**Example 4:** The method according to any one of Examples 1-2, wherein the second predetermined level (Tt2) is the maximum braking torque that can be delivered by the first and second electric motors together.
**Example 5:** The method according to any one of Examples 1-4, wherein the second electric motor (122) is controlled to ramp up its braking torque to its maximum braking torque when the first electric motor (121) is ramping down its braking torque to zero for gear shifting.
**Example 6:** The method according to any one of Examples 1-5, wherein the first electric motor (121) is controlled to ramp up its braking torque to its maximum braking torque when the second electric motor (122) is ramping down its braking torque to zero for gear shifting.
**Example 7:** A control system (110) for controlling torque and gear shifting during changing moving direction of an electrical vehicle (100), wherein the electrical vehicle (100) comprises a gearbox (120) with a first and second electric motors (121, 122) for providing propulsion for the electrical vehicle (100) and a motor controller (130) for controlling operations of the first and second electric motors (121, 122), the control system (110) is configured to:
   determine that a change to a second direction is requested while the vehicle (100) is moving in a first direction;
   determine that a gear shifting is needed for the gearbox (120) when the vehicle (100) is changing from the first direction to the second direction;
   send a first control signal to the motor controller (130) for decelerating the vehicle (100) by setting the first and second electric motors (121, 122) to regenerative braking mode, wherein a braking torque of each electric motor is controlled individually to a level such that a total braking torque is at a first predetermined level (Tt1);
   determine that a speed of the vehicle (100) has been reduced to a predetermined speed (Vss);
   send a second control signal to the motor controller (130) for controlling the first electric motor (121) to ramp down its braking torque to zero and shift gear for the first electric motor (121) while controlling the second electric motor (122) to ramp up its braking torque such that the total braking torque is maintained at the first predetermined level (Tt1);
   send a third control signal to the motor controller (130) for controlling the second electric motor (122) to ramp down its braking torque to zero and shift gear for the second electric motor (122) while controlling the first electric motor (121) to ramp up its braking torque such that the total braking torque is maintained at the first predetermined level (Tt1);
   send a fourth control signal to the motor controller (130) for controlling the second electric motor (122) to ramp up its braking torque such that the total braking torque is increased gradually to a second predetermined level (Tt2);
   determine that the speed of the vehicle (100) has been reduced to zero; and
   send a fifth control signal to the motor controller (130) for controlling both the first and second electric motors (121, 122) to generate torque for accelerating the vehicle moving in the second direction.
**Example 8:** The control system (110) according to Example 7, wherein the first predetermined level (Tt1) is determined to be the maximum braking torque that can be delivered by one electric motor separately.
**Example 9:** The control system (110) according to any one of Examples 7-8, wherein the second predetermined level (Tt2) is determined to be a torque demand from a driver of the vehicle (100).
**Example 10:** The control system (110) according to any one of Examples 7-8, wherein the second predetermined level (Tt2) is determined to be the maximum braking torque that can be delivered by the first and second electric motors together.
**Example 11:** The control system (110) according to any one of Examples 7-10, wherein the control system (110) is configured to control the second electric motor (122) to ramp up its braking torque to its maximum braking torque when the first electric motor (121) is ramping down its braking torque to zero for gear shifting.
**Example 12:** The control system (110) according to any one of Examples 7-11, wherein the control system (110) is configured to control the first electric motor (121) to ramp up its braking torque to its maximum braking torque when the second electric motor (122) is ramping down its braking torque to zero for gear shifting.
**Example 13:** A vehicle (100) comprising a control system (110) according to any one of Examples 7-12.
**Example 14:** A computer system (600) comprising processing circuitry (602) configured to perform the method according to any one of Examples 1-6.
**Example 15:** A vehicle (100) comprising a computer system (600) according to Example 14.
**Example 16:** A computer program product (614) comprising program code (620) for performing, when executed by the processing circuitry (602), the method of any one of Examples 1-6.
**Example 17:** A non-transitory computer-readable storage medium (614) comprising instructions, which when executed by the processing circuitry (602), cause the processing circuitry (602) to perform the method of any one of Examples 1-6.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method performed in a control system (110) for controlling torque and gear shifting during changing moving direction of an electrical vehicle (100), wherein the electrical vehicle (100) comprises a gearbox (120) with a first and second electric motors (121, 122) for providing propulsion for the electrical vehicle (100) and a motor controller (130) for controlling operations of the first and second electric motors (121, 122), the method comprising:
determining (410) that a change to a second direction is requested while the vehicle (100) is moving in a first direction;
determining (420) that a gear shifting is needed for the gearbox (120) when the vehicle (100) is changing from the first direction to the second direction;
sending (430) a first control signal to the motor controller (130) for decelerating the vehicle (100) by setting the first and second electric motors (121, 122) to regenerative braking mode, wherein a braking torque of each electric motor is controlled individually such that a total braking torque is at a first predetermined level (Tt1);
determining (440) that a speed of the vehicle (100) has been reduced to a predetermined speed (Vss);
sending (450) a second control signal to the motor controller (130) for controlling the first electric motor (121) to ramp down its braking torque to zero and shift gear for the first electric motor (121) while controlling the second electric motor (122) to ramp up its braking torque such that the total braking torque is maintained at the first predetermined level (Tt1);
sending (460) a third control signal to the motor controller (130) for controlling the second electric motor (122) to ramp down its braking torque to zero and shift gear for the second electric motor (122) while controlling the first electric motor (121) to ramp up its braking torque such that the total braking torque is maintained at the first predetermined level (Tt1);
sending (470) a fourth control signal to the motor controller (130) for controlling the second electric motor (122) to ramp up its braking torque such that the total braking torque is increased gradually to a second predetermined level (Tt2);
determining (480) that the speed of the vehicle (100) has been reduced to zero; and
sending (490) a fifth control signal to the motor controller (130) for controlling both the first and second electric motors (121, 122) to generate torque for accelerating the vehicle (100) moving in the second direction.

2. The method according to claim 1, wherein the first predetermined level (Tt1) is the maximum braking torque that can be delivered by one electric motor separately.

3. The method according to any one of claims 1-2, wherein the second predetermined level (Tt2) is determined by a torque demand from a driver of the vehicle (100).

4. The method according to any one of claims 1-2, wherein the second predetermined level (Tt2) is the maximum braking torque that can be delivered by the first and second electric motors together.

5. The method according to any one of claims 1-4, wherein the second electric motor (122) is controlled to ramp up its braking torque to its maximum braking torque when the first electric motor (121) is ramping down its braking torque to zero for gear shifting.

6. The method according to any one of claims 1-5, wherein the first electric motor (121) is controlled to ramp up its braking torque to its maximum braking torque when the second electric motor (122) is ramping down its braking torque to zero for gear shifting.

7. A control system (110) for controlling torque and gear shifting during changing moving direction of an electrical vehicle (100), wherein the electrical vehicle (100) comprises a gearbox (120) with a first and second electric motors (121, 122) for providing propulsion for the electrical vehicle (100) and a motor controller (130) for controlling operations of the first and second electric motors (121, 122), the control system (110) is configured to:
determine that a change to a second direction is requested while the vehicle (100) is moving in a first direction;
determine that a gear shifting is needed for the gearbox (120) when the vehicle (100) is changing from the first direction to the second direction;
send a first control signal to the motor controller (130) for decelerating the vehicle (100) by setting the first and second electric motors (121, 122) to regenerative braking mode, wherein a braking torque of each electric motor is controlled individually to a level such that a total braking torque is at a first predetermined level (Tt1);
determine that a speed of the vehicle (100) has been reduced to a predetermined speed (Vss);
send a second control signal to the motor controller (130) for controlling the first electric motor (121) to ramp down its braking torque to zero and shift gear for the first electric motor (121) while controlling the second electric motor (122) to ramp up its braking torque such that the total braking torque is maintained at the first predetermined level (Tt1);
send a third control signal to the motor controller (130) for controlling the second electric motor (122) to ramp down its braking torque to zero and shift gear for the second electric motor (122) while controlling the first electric motor (121) to ramp up its braking torque such that the total braking torque is maintained at the first predetermined level (Tt1);
send a fourth control signal to the motor controller (130) for controlling the second electric motor (122) to ramp up its braking torque such that the total braking torque is increased gradually to a second predetermined level (Tt2);
determine that the speed of the vehicle (100) has been reduced to zero; and
send a fifth control signal to the motor controller (130) for controlling both the first and second electric motors (121, 122) to generate torque for accelerating the vehicle moving in the second direction.

8. The control system (110) according to claim 7, wherein the first predetermined level (Tt1) is determined to be the maximum braking torque that can be delivered by one electric motor separately.

9. The control system (110) according to any one of claims 7-8, wherein the second predetermined level (Tt2) is determined to be a torque demand from a driver of the vehicle (100).

10. The control system (110) according to any one of claims 7-8, wherein the second predetermined level (Tt2) is determined to be the maximum braking torque that can be delivered by the first and second electric motors together.

11. The control system (110) according to any one of claims 7-10, wherein the control system (110) is configured to control the second electric motor (122) to ramp up its braking torque to its maximum braking torque when the first electric motor (121) is ramping down its braking torque to zero for gear shifting.

12. The control system (110) according to any one of claims 7-11, wherein the control system (110) is configured to control the first electric motor (121) to ramp up its braking torque to its maximum braking torque when the second electric motor (122) is ramping down its braking torque to zero for gear shifting.

13. A vehicle (100) comprising a control system (110) according to any one of claims 7-12.

14. A computer system (600) comprising processing circuitry (602) configured to perform the method according to any one of claims 1-6.

15. A vehicle (100) comprising a computer system (600) according to claim 14.
